# EUROPÄISCHE PATENTSCHRIFT

(11) **EP 2 726 729 B1**
(45) Veröffentlichungstag und Bekanntmachung des Hinweises auf die Patenterteilung: **10.08.2016**
(21) Anmeldenummer: 12722695.9
(22) Anmeldetag: 08.05.2012
(51) Int. Cl.: F02M 51/06, F02M 63/00

(54) **BAUTEIL FÜR EINEN MAGNETAKTOR**
COMPONENT FOR A MAGNETIC ACTUATOR
COMPOSANT POUR ACTIONNEUR MAGNÉTIQUE

(30) Priorität: 29.06.2011 DE 102011078255; 14.12.2011 DE 102011088463
(43) Veröffentlichungstag der Anmeldung: 07.05.2014
(73) Patentinhaber: Robert Bosch GmbH, 70442 Stuttgart (DE)
(72) Erfinder: SCHMID, Johannes, 87509 Immenstadt (DE); GRANER, Juergen, 74372 Sersheim (DE); SCHUMACHER, Matthias, 71287 Weissach (DE); BURGHARDT, Andreas, 70176 Stuttgart (DE); WALTER, Rainer, 74385 Pleidelsheim (DE); ENGELBERG, Ralph, 71254 Ditzingen (DE); RAGER, Jochen, 72406 Bisingen (DE)
(86) Internationale Anmeldenummer: PCT/EP2012/058437
(87) Internationale Veröffentlichungsnummer: WO 2013/000611

(56) Entgegenhaltungen:
- WO-A1-2011/076535
- WO-A1-2012/019807
- DE-A1- 19 924 814
- DE-A1-102005 052 252

## Beschreibung

### Stand der Technik

Die vorliegende Erfindung betrifft ein einstückiges Bauteil, insbesondere ein Ventilbauteil, und einen Magnetaktor, insbesondere ein Magnetventil mit einer reduzierten Bauteilezahl, sowie ein Verfahren zur einfachen und kostengünstigen Herstellung eines Bauteils.

Magnetventile sind aus dem Stand der Technik in unterschiedlichen Ausgestaltungen bekannt. Bei modernen Einspritzanlagen werden häufig elektromagnetische Ventile eingesetzt, welche einen möglichst leistungsfähigen Magnetkreis aufweisen sollten, um insbesondere kurze Schaltzeiten sowie ein reproduzierbares Öffnungs- und Schließverhalten zu ermöglichen.

Aus der DE 10 2009 046 466 A1 ist ein Einspritzventil bekannt, welches einen Ventilsitzträger aufweist, der als einteiliges Bauteil hergestellt ist und welcher einen ersten und einen zweiten Bereich aus magnetischem bzw. nichtmagnetischem Material aufweist. Dieser Ventilsitzträger kann beispielsweise mittels eines MIM-Verfahrens (Metall-Injection-Molding) hergestellt werden. Hierbei werden jedoch für beide Bereiche jeweils metallische Werkstoffe verwendet. Es wäre jedoch wünschenswert, ein Einspritzventil bzw. ein Verfahren zu dessen Herstellung bereitzustellen, welches eine weitere Reduktion der Herstellkosten ermöglicht.

Aus der DE 10 2005 052 252 A1 ist bereits ein einteiliges Bauteil für einen Magnetaktor, insbesondere ein Magnetventil in Form eines Brennstoffeinspritzventils bekannt. Das Bauteil umfasst dabei einen Innenpol, eine Magnethülse und eine unmagnetische Trennhülse, wobei der Innenpol, die Magnethülse und die Trennhülse in das einteilige Bauteil integriert sind.

Offenbarung der Erfindung Das erfindungsgemäße einteilige Bauteil mit den Merkmalen des Anspruchs 1 weist demgegenüber den Vorteil auf, dass ein Magnetaktor mit einem leistungsfähigen Magnetkreis bereitgestellt werden kann, bei welchem die Herstellkosten weiter signifikant reduziert werden können. Ferner ist eine Bauteileanzahl durch das erfindungsgemäße Bauteil weiter reduziert. Erfindungsgemäß kann durch den leistungsfähigen Magnetkreis erreicht werden, dass kurze Schaltzeiten und reproduzierbare Öffnungsverhalten und Schließverhalten eines Magnetaktors realisiert werden können. Dies wird erfindungsgemäß dadurch erreicht, dass das einteilige Bauteil zumindest einen elektromagnetischen Aktor mit einem Innenpol, eine Magnethülse und eine unmagnetische Trennhülse aufweist. Dabei sind der Innenpol, die Magnethülse und die Trennhülse zu einem einteiligen Bauteil integriert. Somit liegt zwischen den Teilen Innenpol, Magnethülse und Trennhülse eine stoffschlüssige Verbindung vor. Hierdurch können weiter auch insbesondere die Montagezeiten für den Magnetaktor reduziert werden. Die unmagnetische Trennhülse stellt dabei neben einer Fluiddichtheit nach außen auch eine Minimierung von Wirbelströmen sicher. Insbesondere kann eine an einer Außenseite der Trennhülse angeordnete Wicklung frei von Kraftstoff, welcher üblicherweise die Bauteile sehr stark angreift, gehalten werden.

Die Unteransprüche zeigen bevorzugte Weiterbildungen der Erfindung. Weiter bevorzugt umfasst das einteilige Bauteil ein Gehäuse, welches zusätzlich in das einteilige Bauteil integriert ist. Hierdurch kann die Bauteilezahl weiter reduziert werden und eine noch kostengünstigere Herstellung erreicht werden.

Gemäß einer bevorzugten Ausgestaltung der Erfindung weist das Gehäuse einen in axialer Richtung vorstehenden Anbindungsflansch für eine Anbindung des einteiligen Bauteils auf. Hierdurch kann das einteilige Bauteil einfach und sicher an andere Bauteile, z.B. an Bauteile eines Einspritzventils, angebunden werden.

Erfindungsgemäß weist die Trennhülse an einem ersten Ende einen radial gerichteten ersten Wandbereich auf und an einem zweiten Ende einen radial gerichteten zweiten Wandbereich auf. Hierdurch wird zwischen den beiden Wandbereichen ein Aufnahmeraum für die Wicklung geschaffen, so dass die Wicklung schnell und einfach auf die Trennhülse zwischen den Wandbereichen gewickelt werden kann. Gegebenenfalls kann bevorzugt zur Abdeckung noch eine vorzugsweise geschlitzte Hülse über die Wicklung geschoben werden.

Gemäß einer alternativen Ausgestaltung der vorliegenden Erfindung ist zwischen den beiden Wandbereichen an der Trennhülse der Innenpol des einteiligen Bauteils angeordnet. Hierdurch kann eine besonders geschützte Anordnung des Innenpols erreicht werden. Insbesondere ist der Magnetwerkstoff des Innenpols vor aggressiven Medien, wie z.B. Kraftstoff, geschützt. Als Magnetwerkstoff kann dadurch beispielsweise Reineisen verwendet werden. Darüber hinaus kann eine äußere, in axialer Richtung gerichtete Fläche der Trennhülse als Anschlagfläche, beispielsweise für einen Anschlag eines Ankers eines Magnetventils, genutzt werden.

Das erfindungsgemäße Bauteil wird insbesondere als Einspritzventil bei der Einspritzung von Kraftstoffen bei Fahrzeugen verwendet.

Zeichnung Nachfolgend werden bevorzugte Ausführungsbeispiele der Erfindung unter Bezugnahme auf die begleitende Zeichnung im Detail beschrieben. In der Zeichnung ist:
- Figur 1: eine schematische Schnittansicht eines einteiligen Bauteils für ein Einspritzventil gemäß einem ersten bekannten Beispiel.
- Figur 2: eine schematische Schnittansicht eines einteiligen Bauteils für einen Magnetaktor gemäß einem zweiten bekannten Beispiel,
- Figur 3: eine schematische Schnittansicht eines einteiligen Bauteils für ein Einspritzventil gemäß einem dritten bekannten Beispiel,
- Figur 4: eine schematische Schnittansicht eines einteiligen Bauteils für ein Einspritzventil gemäß einem vierten bekannten Beispiel,
- Figur 5: eine schematische Schnittansicht des einteiligen Bauteils von Figur 4 mit montierter Wicklung,
- Figur 6: eine schematische Schnittansicht eines einteiligen Bauteils für ein Einspritzventil gemäß einem fünften bekannten Beispiel,
- Figur 7: eine schematische Schnittansicht des einteiligen Bauteils von Figur 6 entlang der Linie V-V,
- Figur 8: eine schematische Schnittansicht eines einteiligen Bauteils für ein Einspritzventil gemäß einem Ausführungsbeispiel der Erfindung, und
- Figur 9: eine schematische Schnittansicht eines einteiligen Bauteils für ein Einspritzventil gemäß einem sechsten bekannten Beispiel.

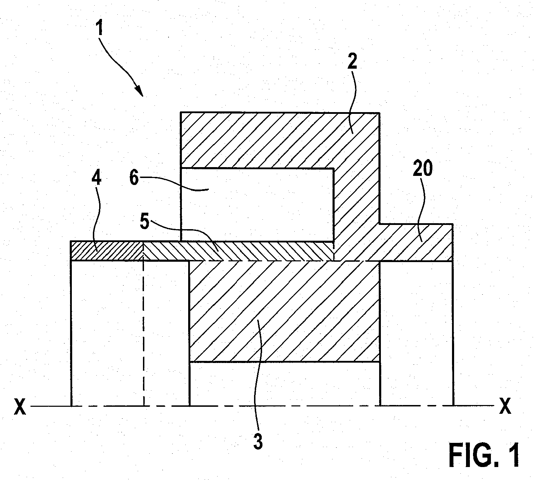

Bevorzugte Ausführungsformen der Erfindung Nachfolgend wird unter Bezugnahme auf Figur 1 ein als einteiliges Ventilbauteil 1 vorgesehenes einteiliges Bauteil gemäß einem ersten bekannten Beispiel im Detail beschrieben.

Wie aus Figur 1 ersichtlich ist, umfasst das einteilige Ventilbauteil 1 ein Ventilgehäuse 2, welches aus einem metallischen Material hergestellt ist sowie einen zylindrischen Innenpol 3, welcher aus einem magnetisierbaren Material hergestellt ist. Weiterhin umfasst das einteilige Ventilbauteil 1 eine zylindrische Magnethülse 4 aus einem magnetisch leitfähigen Material sowie eine zylindrische Trennhülse 5 aus einem unmagnetischen Material, beispielsweise einem austenitischen Material oder einer Keramik. Mit X-X ist eine Axialachse des einteiligen Ventilbauteils 1 bezeichnet, in deren Richtung ein Nadelhub einer nicht gezeigten Nadel ausgeführt wird.

Weiterhin ist zwischen der Trennhülse 5 und dem Ventilgehäuse 2 ein Aufnahmeraum 6 zur Aufnahme einer Wicklung (nicht gezeigt) vorgesehen. Das Bezugszeichen 20 bezeichnet einen Anbindungsflansch.

Somit ist bei dem einteiligen Ventilbauteil 1 eine unmagnetische Trennhülse 5 integriert, wobei zwischen den beschriebenen Teilbereichen, umfassend das Ventilgehäuse 2, den Innenpol 3, die Magnethülse 4 und die Trennhülse 5 jeweils eine stoffschlüssige Verbindung vorhanden ist. Das einteilige Ventilbauteil wird durch ein Zwei-Komponenten-Pulver-Spritzgussverfahren hergestellt. Durch die Integration der unmagnetischen Trennhülse 5 können magnetische Verluste in der Trennhülse vermieden werden. Die magnetischen Feldlinien verlaufen zwischen Anker und Innenpol und nicht über die Trennhülse. Dadurch kann ein leistungsfähiger und sehr kostengünstig herstellbarer Magnetkreis für ein Magnetventil bereitgestellt werden. Durch die Integration der unmagnetischen Trennhülse 5 in das einteilige Ventilbauteil 1 wird auch eine Funktion einer magnetischen Trennung in das einteilige Ventilbauteil 1 integriert. Ein Magnetwerkstoff des Innenpols 3 ist vorzugsweise mit möglichst hoher Sättigungsinduktion ausgeführt, um die Magneteffizienz zu optimieren. Darüber hinaus stellt das einteilige Ventilbauteil ferner eine kraftstoffdichte und hochdruckdichte Verbindung zwischen den einzelnen Teilen bereit, ohne dass hier aufwendige Verbindungstechniken, wie beispielsweise Schweißen oder dgl., notwendig sind. Die dichte Verbindung wird dabei durch das Zwei-Komponenten-Pulver-Spritzgussverfahren erreicht.

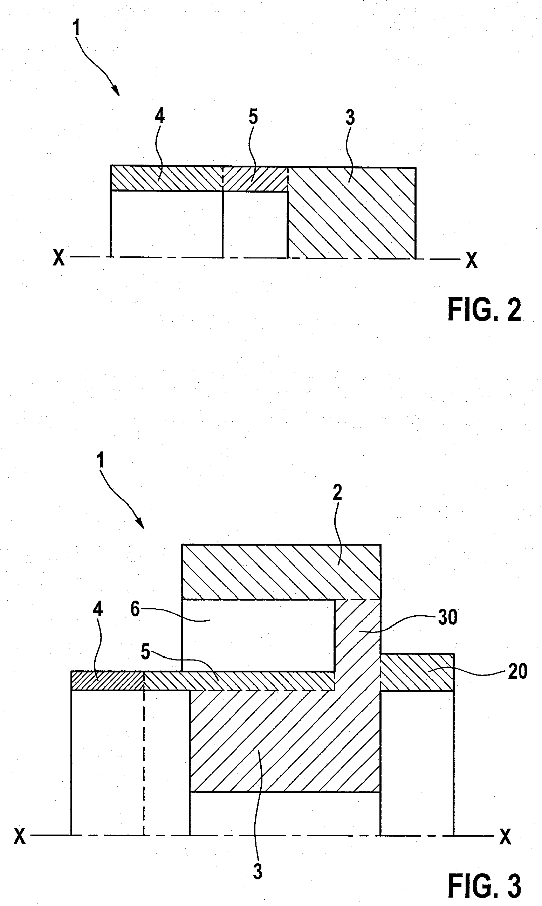

Die Figuren 2 bis 7 zeigen alternative bekannte Beispiele, wobei jeweils gleiche bzw. funktional gleiche Teile mit den gleichen Bezugszeichen wie im ersten bekannten Beispiel bezeichnet sind.

Figur 2 zeigt ein zweites bekanntes Beispiel eines einteiligen Bauteils 1, bei dem das einteilige Bauteil ohne Gehäuse vorgesehen ist. Somit umfasst das einteilige Bauteil lediglich eine zylindrische Magnethülse 4 aus einem magnetisch leitfähigen Material, eine zylindrische, unmagnetische Trennhülse 5 und einen zylindrischen Innenpol 3. Wie aus Figur 2 ersichtlich ist, ist die Trennhülse 5 dabei an einem stirnseitigen Ende des Innenpols 3 angeordnet, so dass das einteilige Bauteil 1 einen konstanten Außendurchmesser aufweist.

Figur 3 zeigt ein drittes bekanntes Beispiel, bei dem der Innenpol 3 einen nach außen gerichteten, radialen Flansch 30 aufweist, welcher von einem zylindrischen Hauptkörper des Innenpols 3 radial nach außen vorsteht. Dieser radiale Flansch 30 kann gegebenenfalls auch in Segmente unterteilt werden, indem zwischen den einzelnen Segmenten elektrisch nicht leitende Teilbereiche vorgesehen werden. Diese Ausgestaltung des einteiligen Bauteils 1 ergibt eine weitere Verbesserung, d.h., Reduzierung, von auftretenden Wirbelströmen. Das Ventilgehäuse umfasst in diesem Ausführungsbeispiel zwei zylindrische Teilbereiche 2 und 20.

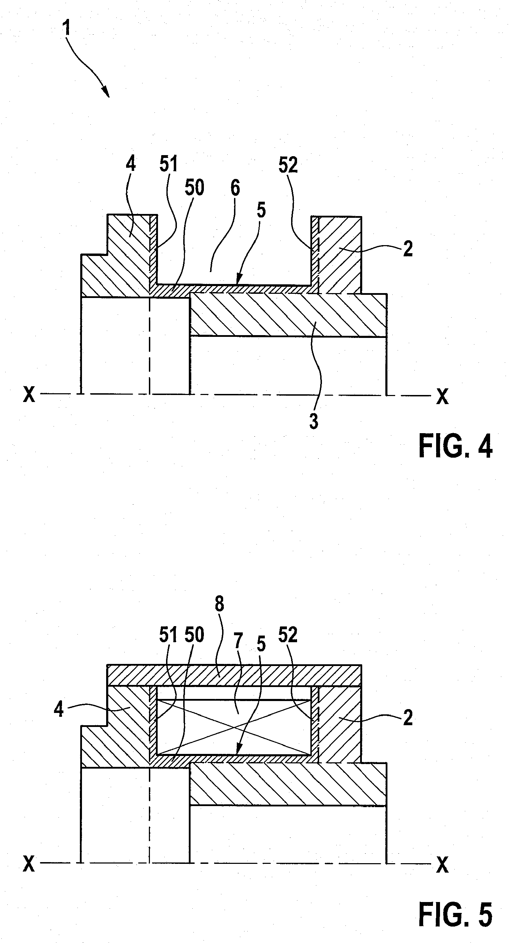

Die Figuren 4 und 5 zeigen ein viertes bekanntes Beispiel, bei dem die unmagnetische Trennhülse 5 einen zylindrischen Basisbereich und an einem ersten axialen Ende einen radial nach außen gerichteten ersten Wandbereich 51 aufweist. Ferner weist die Trennhülse 5 an einem zweiten axialen Ende einen radial nach außen gerichteten zweiten Wandbereich 52 auf. Somit ergibt sich in axialer Richtung X-X zwischen den beiden Wandbereichen 51, 52 ein Aufnahmeraum 6 zur Aufnahme einer Wicklung 7 (vgl. Figuren 4 und 5). Nachdem die Wicklung 7 auf dem äußeren Umfang der Trennhülse 5 zwischen die Wandbereiche 51, 52 aufgewickelt wurde, wird eine Abdeckhülse 8 übergeschoben, welche die Wicklung 7 abdeckt. Ein Teil des Ventilgehäuses 2 ist einstückig mit dem Innenpol 3 gebildet, ein anderer Teil des Ventilgehäuses wird durch die separate Abdeckhülse 8 bereitgestellt. Der zylindrische Innenpol ist radial innerhalb der Trennhülse 5 angeordnet.

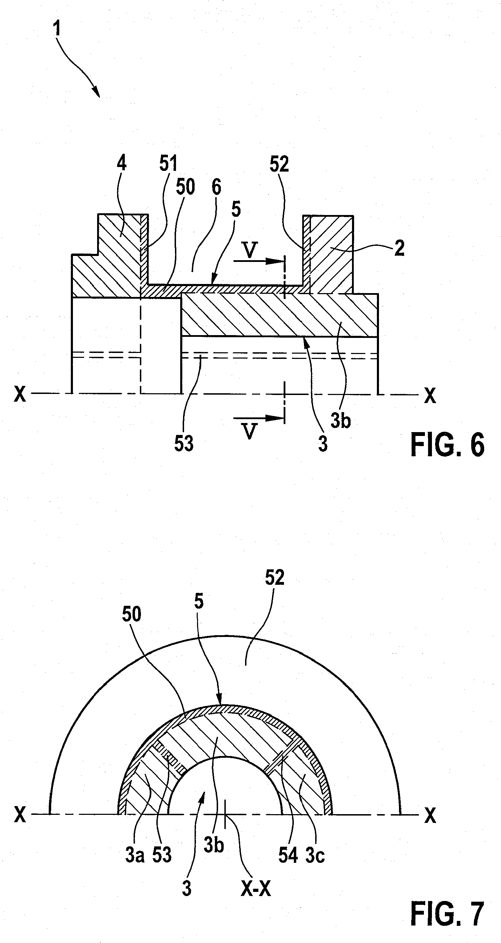

Das in den Figuren 6 und 7 gezeigte fünfte bekanntes Beispiel entspricht im Wesentlichen dem vierten Ausführungsbeispiel, wobei zusätzlich noch im zylindrischen Innenpol 3 eine Vielzahl von Segmentierungsbereichen 53, 54 vorgesehen sind, die aus elektrisch nicht leitendem Material hergestellt sind. Die Segmentierungsbereiche 53, 54 sind als in Axialrichtung X-X verlaufende Wandbereiche vorgesehen, welche einteilig am inneren Umfang der Trennhülse 5 radial nach Innen verlaufend ausgebildet sind. Hierdurch wird der Innenpol 3 in mehrere Segmente 3a, 3b, 3c unterteilt, wodurch im Betrieb die Entstehung von Wirbelströmen minimiert werden kann. Hierdurch wird ein leistungsstärkerer Magnetkreis erhalten.

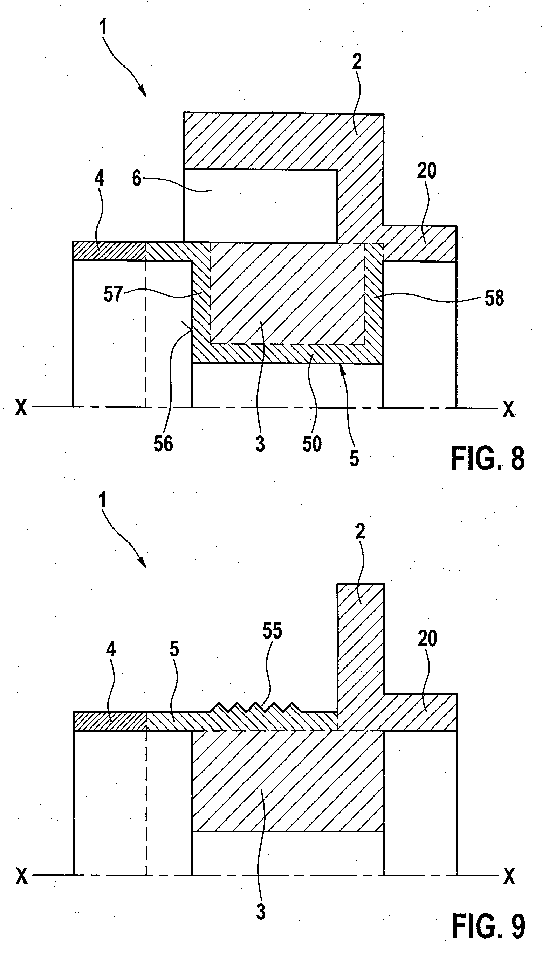

Figur 8 zeigt ein Ausführungsbeispiel einen erfindungsgemäßen einteiligen Bauteils 1, bei dem die aus einem unmagnetischen Material hergestellte Trennhülse 5 einen radial nach außen gerichteten ersten Wandbereich 57 und einen zweiten Wandbereich 58 aufweist. In dem in axialer Richtung zwischen den beiden Wandbereichen 57, 58 gebildeten Raum ist beim sechsten Ausführungsbeispiel jedoch der Innenpol 3 aufgenommen und radial außerhalb des Basisbereichs 50 angeordnet. Wie aus Figur 8 ersichtlich ist, ist der Innenpol 3 somit von drei Seiten von der Trennhülse 5 umschlossen. Zwischen einer radialen äußeren Seite des Innenpols 3 und dem Ventilgehäuse 2 ist wiederum der Aufnahmeraum 6 zur Aufnahme der nicht gezeigten Wicklung vorgesehen. Somit stellt die Trennhülse 5 neben der Funktion der magnetischen Trennung zusätzlich noch einen Schutz gegen aggressive Medien, wie beispielsweise Kraftstoff für den Innenpol 3, bereit. Hierdurch kann der Magnetwerkstoff für den Innenpol 3 mit einer maximalen Sättigungsinduktion ausgeführt werden. Abhängig von der Materialwahl für die Trennhülse 5 kann zusätzlich noch eine Anschlagfläche 56 für eine Ventilnadel und ein mit der Ventilnadel verbundenes Bauteil vorgesehen werden. Hierdurch kann insbesondere ein separates Bauteil für einen Anschlag für die Ventilnadel verzichtet werden. Mit dieser Ausführungsform des einteiligen Bauteils 1 kann insbesondere ein sehr kompakter Aufbau für das Einspritzventil realisiert werden.

Figur 9 zeigt ein sechstes bekanntes Beispiel, welches eine Trennhülse 5 aus unmagnetischem Material aufweist, an dessen äußerem Umfang eine Profilierung 55 ausgebildet ist. Die Profilierung 55 umfasst eine Vielzahl von ringförmig verlaufenden Nuten und Erhebungen, um eine Wicklung (nicht gezeigt) aufzunehmen. Somit ist in die unmagnetische Trennhülse 5 ferner noch ein Wicklungsträger integriert, so dass die Teileanzahl für das Einspritzventil durch Integration des Wicklungsträgers weiter reduziert werden kann. Es sei angemerkt, dass ein derartiger integrierter Wicklungsträger auch bei den anderen beschriebenen bekannten Beispielen, mit Ausnahme des Ausführungsbeispiels, vorgesehen sein kann.

Zu dem beschriebenen Ausführungsbeispiel sei angemerkt, dass dieses sowohl mit einem einstückigen Innenpol 3 oder auch mit einem in mehrere Segmente unterteilten Innenpol ausgeführt werden können.

Ferner sei angemerkt, dass das beschriebene Ausführungsbeispiel statt bei Magnetventilen auch auf anderen technischen Gebieten als Magnetaktoren verwendet werden kann.

## Patentansprüche

1. Einteiliges Bauteil für einen Magnetaktor, insbesondere ein Magnetventil, umfassend:
- einen Innenpol (3),
- eine Magnethülse (4), und
- eine unmagnetische Trennhülse (5),
- wobei der Innenpol (3), die Magnethülse (4) und die Trennhülse (5) in das einteilige Bauteil integriert sind,
**dadurch gekennzeichnet,**
**dass** die Trennhülse (5) einen radial gerichteten ersten Wandbereich (57) aufweist und einen radial gerichteten zweiten Wandbereich (58) aufweist und dass der Innenpol (3) zwischen dem ersten Wandbereich (57) und dem zweiten Wandbereich (58) angeordnet ist.

2. Bauteil nach Anspruch 1, ferner umfassend ein Gehäuse (2), welches zusätzlich in das einteilige Bauteil integriert ist.

3. Bauteil nach Anspruch 2, **dadurch gekennzeichnet, dass** das Gehäuse (2) einen Anbindungsflansch (20) für eine Anbindung des einteiligen Bauteils aufweist.

4. Bauteil nach Anspruch 1, **dadurch gekennzeichnet, dass** einer der Wandbereiche (57, 58) der Trennhülse (5) einen Anschlag (56) für eine Ventilnadel oder ein mit der Ventilnadel verbundenes Bauteil bildet.

5. Magnetventil mit einem Magnetaktor, insbesondere Einspritzventil, zur Einspritzung von Kraftstoff, umfassend ein Bauteil nach einem der vorhergehenden Ansprüche.

## Claims

1. Unipartite component for a magnetic actuator, in particular a magnetic valve, comprising:
- an inner pole (3),
- a magnetic sleeve (4), and
- a non-magnetic separating sleeve (5),
- wherein the inner pole (3), the magnetic sleeve (4) and the separating sleeve (5) are integrated into the unipartite component,
**characterized in that**
the separating sleeve (5) has a radially directed first wall region (57) and has a radially directed second wall region (58), and **in that** the inner pole (3) is arranged between the first wall region (57) and the second wall region (58).

2. Component according to Claim 1, furthermore comprising a housing (2) which is additionally integrated into the unipartite component.

3. Component according to Claim 2, **characterized in that** the housing (2) has an attachment flange (20) for an attachment of the unipartite component.

4. Component according to Claim 1, **characterized in that** one of the wall regions (57, 58) of the separating sleeve (5) forms a stop (56) for a valve needle or for a component connected to the valve needle.

5. Magnetic valve having a magnetic actuator, in particular injection valve, for the injection of fuel, comprising a component according to one of the preceding claims.

## Revendications

1. Composant d'une seule pièce pour un actionneur magnétique, en particulier une électrovanne, comprenant :
- un pôle intérieur (3),
- une douille magnétique (4), et
- une douille de séparation non magnétique (5),
- le pôle intérieur (3), la douille magnétique (4) et la douille de séparation (5) étant intégrés dans le composant d'une seule pièce,
**caractérisé en ce que**
la douille de séparation (5) présente une première région de paroi (57) orientée radialement et une deuxième région de paroi (58) orientée radialement, et **en ce que** le pôle intérieur (3) est disposé entre la première région de paroi (57) et la deuxième région de paroi (58).

2. Composant selon la revendication 1, comprenant en outre un boîtier (2) qui est en outre intégré dans le composant d'une seule pièce.

3. Composant selon la revendication 2, **caractérisé en ce que** le boîtier (2) présente une bride de liaison (20) pour une liaison du composant d'une seule pièce.

4. Composant selon la revendication 1, **caractérisé en ce que** l'une des régions de paroi (57, 58) de la douille de séparation (5) forme une butée (56) pour une aiguille de soupape ou un composant connecté à l'aiguille de soupape.

5. Electrovanne comprenant un actionneur magnétique, en particulier soupape d'injection, pour l'injection de carburant, comprenant un composant selon l'une quelconque des revendications précédentes.
